(19) Europäisches Patentamt
European Patent Office
Office européen des brevets

(11) **EP 3 185 652 B1**

(12) **EUROPEAN PATENT SPECIFICATION**

(45) Date of publication and mention
of the grant of the patent:
**29.08.2018  Bulletin 2018/35**

(51) Int Cl.:
**H05B 37/02** *(2006.01)*

(21) Application number: **15202507.8**

(22) Date of filing: **23.12.2015**

(54) **AUTOMATIC CONFIGURATION OF LUMINAIRES IN A LUMINAIRE SYSTEM**

**AUTOMATISCHE KONFIGURATION VON LEUCHTEN IN EINEM LEUCHTENSYSTEM**

**CONFIGURATION AUTOMATIQUE DE LAMPADAIRES DANS UN SYSTÈME DE LUMINAIRE**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.06.2017  Bulletin 2017/26**

(73) Proprietor: **Servodan A/S**
**6400 Sonderborg (DK)**

(72) Inventor: **NIELSEN, Tommy Bjerre**
**6000 Kolding (DK)**

(74) Representative: **Høiberg P/S**
**Adelgade 12**
**1304 Copenhagen K (DK)**

(56) References cited:
**WO-A1-2005/096677     US-A1- 2011 031 897**

## Description

## Technical field of the invention

The present invention relates to a luminaire system. More particular, the invention relates to a luminaire system in which the luminaires can be configured in a fully automatic way and to a method for fully automatically configure luminaires in a luminaire system.

## Background of the invention

Lighting in buildings is one of the most significant energy consumers of that building. Therefore, it is more and more required to have luminaire systems which allow saving energy. One way to do so is to make use of, for example, presence or movement sensors, to only illuminate the lighting when persons are present in a particular room or to make use of light sensors so that the lighting is only illuminates when there is not enough daylight in a room.

Another way of saving energy is to divide the rooms in a building into lighting zones and to control such zones depending on whether persons are present in that particular zone or not and/or on whether there is more or less daylight coming from outside into that particular zone. In that way, for example, in zones that are closer to the window and thus zones where there is more daylight, the lighting can be more dimmed than in zones further away from the window.

However, configuration of such luminaire systems, dividing the rooms into different zones and allocating each of the luminaires to a particular zone, takes a lot of time during commissioning, as it has to be done manually and one luminaire at the time. A typical way of doing such manual zone configuration is the following. A controller randomly turns on the luminaries, one at the time. For each turned on luminary, the installer has to use a remote control to "tell" the system (movement sensor) what zone the current luminaire belongs to. As, for example, a DALI light system can comprise up to 64 luminaires, this process may have to be repeated up to 64 times, which might be very time consuming. A lighting system with auto-commissioning capabilities and with possibility of saving energy by using a daylight harvesting approach is known from the US Patent Application US2011/0031897 A1.

## Summary of the invention

It is an object of embodiments of the present invention to provide a luminaire system that can be fully automatically configured, including allocation of each of the luminaires in the system to a zone and to provide a method for automatically configuring such luminaire system.

The above objective is accomplished by a method and system according to embodiments of the present invention.

According to a first aspect, the present invention provides a luminaire system. The luminaire system comprises a plurality of luminaires for installation in a room. The luminaire system furthermore comprises a light sensor arrangement comprising at least one light sensor and configured to measure light intensity in different directions, for example one or more ranges of angles, such that a light intensity of each of the luminaires can be measured when installed in the room. Moreover, the luminaire system comprises mapping means configured to address each of the luminaires independently and to divide the room into a predefined number of zones depending on the measured light intensity and processing means configured to estimate the relative position of each luminaire in the room with respect to the light sensor arrangement and automatically allocate at least one of the luminaires to each of the zones, such that each zone is associated with at least one luminaire.

A luminaire system according to embodiments of the invention has as an advantage that the luminaires can be fully automatically configured and allocated to different zones. This can significantly reduce the time to configure such luminaire system compared to current luminaire systems and their configuration.

The at least one light sensor may be adapted to measure incoming light from outside the building, e.g. light coming into the room through a window.

The light sensor arrangement may comprise a plurality of light sensors. According to embodiments of the invention, the luminaire system may furthermore comprise a lens, and the light sensor arrangement may comprise four light sensors which are located in the lens and whereby, when the lens is divided into four quarters, e.g. such that each light sensor covers approx. 90 degrees, one sensor is located in each of the quarters of the lens. According to embodiments of the invention, such lens may be located at a ceiling, on a wall or in a corner of the room. According to other embodiments of the invention, the number of light sensors in the light sensor arrangement may be equal to the number of luminaires in the system and one light sensor may be located in each of the luminaires.

The mapping means may, according to specific embodiments of the invention, be adapted to divide the room into between one and eight zones. And according to still more specific embodiments, the mapping means may be adapted to divide the room into three zones. However, in general, the mapping means may be adapted to divide the room into any other number of zones depending on the size of the room and the number of luminaires in the system.

According to embodiments of the invention, each of the plurality of luminaires in the luminaire system may be of a same type. Or in other words, each of the plurality of luminaires in the luminaire system may distribute the light in a same way. This will give the best results because there can be no misinterpretation of the measured light intensity because of particular luminaires having a different light output than other luminaires in the system.

According to a second aspect of the invention, a computer implemented method is provided for fully automatically configuring luminaires in a luminaire system. The method comprises:

- connecting to the luminaire system comprising a plurality of luminaires installed in a plurality of positions in a room,
- obtaining a direction dependent measurement of the light intensity of each of the luminaires in the room by means of a light sensor arrangement,
- dividing the room into a predefined number of zones depending on the measured light intensity from each of the luminaires, and
- estimate the position of each luminaire in the room and fully automatically allocate at least one of the luminaires to each of the zones, such that each zone in the room is associated with at least one luminaire.

According to embodiments of the invention, estimating the position of each luminaire may be performed by determining the relative position of the luminaire with respect to the light sensor arrangement, and thus with respect to the light sensor, and determining the location of the windows in the room. The first zone may then, for example be chosen to be closest to the windows, and from there on the other zones may be defined. However, the zones can also be chosen differently. Determining the relative position of a luminaire with respect to the light sensor arrangement may be performed by determining an illuminance vector of the luminaire, determining the angle of the illuminance vector, and determining the distance between that luminaire and the light sensor arrangement.

Determining an illuminance vector may be done by means of at least two light sensors of the light sensor arrangement.

According to embodiments of the invention, the method may furthermore comprise checking the automatic allocation of each of the plurality of luminaires to the different zones, and whenever necessary, manually changing the allocation of one or more of the plurality of luminaires to another zone.

The present invention furthermore provides a computer program product for carrying out the method according to embodiments of the present invention.

## Brief description of the drawings

It has to be noted that same reference signs in the different figures refer to same, similar or analogous elements.

Fig. 1 schematically illustrates a luminaire system according to embodiments of the invention.

Fig. 2 illustrates a room comprising a luminaire system according to embodiments of the invention.
Fig. 3 schematically illustrates the step of determining $I_1$ and $I_2$.
Figs. 4A and 4B illustrates an example and the result of applying a method according to an embodiment of the invention.

## Description of illustrative embodiments

In the description different embodiments will be used to describe the invention. Therefore reference will be made to different drawings. It has to be understood that these drawings are intended to be non-limiting, the invention is only limited by the claims. The drawings are thus for illustrative purposes, the size of some of the elements in the drawings may be exaggerated for clarity purposes.

The term "connected" as used in the claims and in the description has not to be interpreted as being restricted to direct connections, unless otherwise specified. Thus, part A being connected to part B is not limited to part A being in direct contact to part B, but also includes indirect contact between part A and part B, in other words also includes the case where intermediate parts are present in between part A and part B.

Not all embodiments of the invention comprise all features of the invention.

In a first aspect, the present invention provides a luminaire system comprising a plurality of luminaires for installation in a room, and a light sensor arrangement comprising at least one light sensor and configured to measure light intensity in different directions such that a light intensity of each of the luminaires can be measured when installed in the room. According to the invention, the luminaire system furthermore comprises mapping means configured to address, e.g. control, for example in terms of on-off control and/or light intensity control, each of the luminaires independently and to divide the room into a predefined number of zones depending on the number of luminaires and on the measured light intensity and processing means configured to estimate the relative position of each luminaire in the room with respect to the light sensor arrangement and automatically allocate at least one of the luminaires to each of the zones, such that each zone is associated with at least one luminaire.

A luminaire system according to embodiments of the invention can be fully automatically configured in less than one minute. This means that in less than one minute the at least one sensor in the light sensor arrangement will determine the light intensity and/or the difference in light intensity in the room and, depending thereon and on the number of luminaires in the luminaire system, divide the room in different zones, and allocate each of the luminaires to one of the zones. Hence, a luminaire system according to embodiments of the invention has as an advantage that the time to configure such luminaire system can be significantly reduced compared to current luminaire systems.

The present invention will hereinafter be described by means of different embodiments.

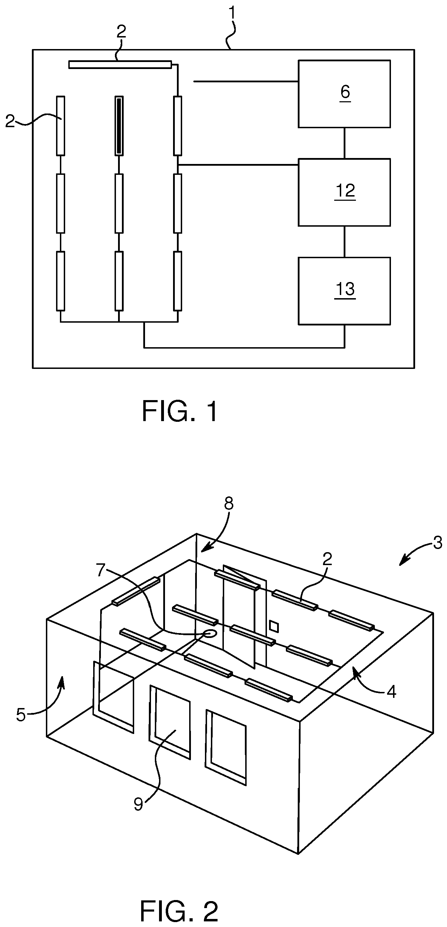

Figs. 1 and 2 schematically illustrate a luminaire system 1 according to embodiments of the invention. The luminaire system 1 comprises a plurality of luminaires 2 for installation in a room 3. The luminaires 2 can be provided in any configuration as required for a particular room 3. For example, the luminaires 2 may be provided in rows and columns. However, according to other embodiments, the luminaires 2 may also be randomly provided. The luminaires 2 may be provided on a ceiling 4, as illustrated in Fig. 2, or on a wall 5 of the room 3 or at any other suitable place in the room 3. In the example given in Figs. 1 and 2 a plurality of luminaires 2 are provided in rows and columns on the ceiling 4 and one luminaire 2 is provided on one of the walls 5 of the room 3.

According to embodiments of the invention, the luminaires 2 in the luminaire system 1 may preferably all be of a same type, i.e. may all distribute the light in a same way. This will give the best results because there can be no misinterpretation of the measured light intensity because of luminaires 2 that have a different light output than other luminaires 2 in the system 1. However, this should not be necessarily so. According to other embodiments, the luminaires 2 in the luminaire system 1 may also be of a different kind and thus may distribute the light in a different way. In this case, if the light output of all the luminaires is known, the difference in output light intensity can be taken into account to, in that way, correctly determining their relative position and to accordingly allocate them to a particular zone of the luminaire system (see further).

The luminaire system 1 further comprises a light sensor arrangement 7. The light sensor arrangement 7 comprises at least one light sensor for measuring the light intensity in the room 3. According to embodiments of the invention, the light sensor arrangement 7 may comprise only one light sensor (not illustrated). This may be the case, for example, for a luminaire system 1 positioned in a long corridor, where for example only one row of luminaires is provided. In such case, the direction of the luminaires is already known, as there is only one row of luminaires along the length of the corridor. Hence, only the distance between each of the luminaires 2 and the light sensor is to be determined to be able to allocate the luminaires 2 to the right zone. According to preferred embodiments of the invention, however, the light sensor arrangement 7 may comprise a plurality of light sensors.

The light sensor arrangement 7 is configured to measure the light intensity in different directions, such that a light intensity of each of the luminaires 2 installed in the room 3 can be measured. This is done when all the luminaires 2 in the system 1 are turned off and the only light coming in is the light coming in from, for example, windows 9 in the room 3. The light intensity is preferably measured in four directions, i.e. north, south, east, west. This gives an idea of the type of room 3 and of where the windows 9 are located in the room 3, i.e. where the highest light intensity is measured.

According to one embodiment, the light sensor arrangement 7 may comprise four light sensors which are provided in a lens. Hence, in that case the sensor arrangement 7 may also comprise a lens. This lens may in some cases already be present in the room 3 for movement detection, e.g. for illuminating the luminaires 2 upon detection by the lens of a person entering the room 3. Hence, it is in that case an advantage of the luminaire system 1 according to embodiments of the invention, if such lens is already present, that the light sensors may be hidden behind that lens and are hence not visibly present in the room 3. According to embodiments of the invention, the lens may be located at the ceiling 4, as illustrated in Fig. 2, but may, according to other embodiments, also be provided on a wall 5 or in a corner 8 of the room 3.

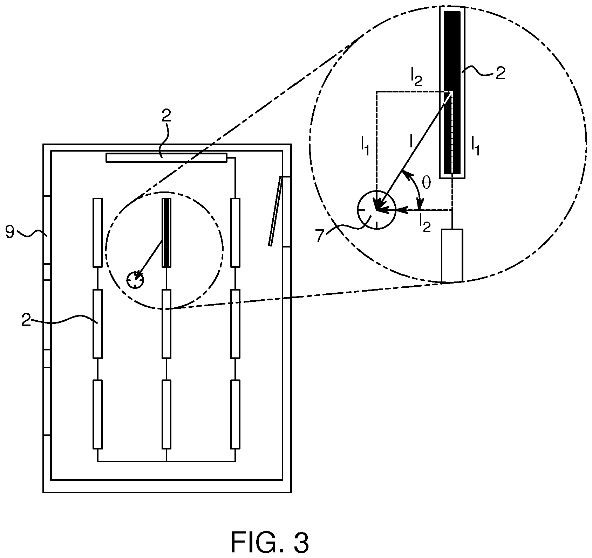

In view of the above and in case the light sensors are provided in a lens, preferably four sensors, each being able to measure light intensity in a different direction, may be provided, so that the light intensity can be measured over all directions in the room 3. The lens may then be divided into four quarters (as can be seen in Fig. 3) and a light sensor may be located in each of the quarters of the lens. However, the invention could also work with two or three light sensors, depending on the type of room 3, the kind of application and the required accuracy of the measurement of the light intensity in the room 3.

According to other embodiments, the number of light sensors in the light sensor arrangement 7 may be equal to the number of luminaires 2 present in the luminaire system 1. In such case, one light sensor may be allocated to each of the luminaires 2. The light sensors may be provided such that the light sensor arrangement 7 is able to measure in different directions. For example, one light sensor located in a first luminaire 2 may be able to measure in a different direction than another light sensor located in a second luminaire 2, which again may be able to measure in a different direction than a light sensor located in a third luminaire 2 and so on.

The luminaire system 1 furthermore comprises mapping means 12 configured to address each of the luminaires 2 independently and to divide the room 3 into a predefined number of zones Z depending on the measured light intensity. The first zone $Z_1$ may, for example, be located at the location where the windows 9 are, i.e. where the highest light intensity was measured. However, this should not necessarily be so. The first zone $Z_1$ can be defined in any suitable way. On the basis of this first zone $Z_1$, also the other zones $Z_2$, $Z_3$, ... $Z_n$ can be determined. The mapping means 12 may comprise a digital addressable light interface (DALI) or a Zigbee Light system to address the each of the luminaires 2 independently.

The luminaire system 1 moreover comprises processing means 13 configured to estimate the position of each of the luminaires 2 in the room 3 and automatically allocate at least one of the luminaires 2 in the luminaire system 1 to each of the zones Z, such that each zone Z is associated with at least one luminaire 2. The processing means 13 may, for example, be a microcontroller used for performing an algorithm. The microcontroller 13 can be located in the sensor arrangement 7 or can be located in one of the luminaires 2. Further, the algorithm used for allocating the luminaires 2 to a zone Z can be performed by a device by which commissioning of the luminaires 2 is performed, such as for example as smartphone, a tablet, a computer or any other suitable device known by a person skilled in the art.

Correspondingly the maping means may be a microcontroller used for performing an algorithm. Such a microcontroller can be located in the sensor arrangement 7 or can be located in one of the luminaires 2. Further, the algorithm used for dividing the rooms into zones can be performed by a device by which commissioning of the luminaires 2 is performed, such as for example as smartphone, a tablet, a computer or any other suitable device known by a person skilled in the art. Hence, the mapping means and the processing means may be incorporated in the same processing unit, internal to the luminaire system and/or as an external processing unit, e.g. in a smartphone or other suitable computing device.

At the end of the allocation of the luminaires 2 to one of the zones Z, for example a remote control can be used to show the zone division. When a user does not agree on the allocation of one or more luminaires 2 to a particular zone Z, he can manually change one or more allocations.

According to embodiments of the invention, the room 3 can be divided into any required number n of zones $Z_1$ to $Z_n$. This is a big advantage of the luminaire system 1 according to embodiments of the invention, compared to existing luminaire systems in which the division of the zones Z and the allocations of the luminaires 2 to the different zones Z is done manually. For example, the room 3 may be divided into between one and eight zones Z. However, generally speaking, the room 3 may be divided into any suitable number of zones Z depending on how big the room 3 is and on how many luminaires 2 the luminaire system 1 comprises. The only limit on the number of zones Z is determined by the digital addressable light interface (DALI) or the Zigbee Light system used to address the luminaires 2. For example, for a DALI system, the system is limited to 64 luminaires 2. Another advantage of a luminaire system 1 according to embodiments of the invention is that it can save up to 1 or 2 hours for the configuration compared to existing systems. Moreover, a user can configure the luminaire system 1 according to embodiments of the invention himself, instead of having to rely on an installer.

In a second aspect, the present invention provides a computer implemented method for fully automatically configuring luminaires 2 in a luminaire system 1 as described above. The method comprises connecting to the luminaire system 1 comprising a plurality of luminaires 2 installed in a plurality of positions in a room 3, obtaining a direction dependent measurement of the light intensity of each of the luminaires 2 in the room 3, dividing the room 3 into a predefined number of zones $Z_1$, $Z_2$, ... $Z_n$ depending on the measured light intensity of each of the luminaires 2, and estimate the position of each of the plurality of luminaires 2 in the room 3 and fully automatically allocate at least one of the plurality of luminaires 2 to each of the zones $Z_1$, $Z_2$, ... $Z_n$, such that each zone $Z_1$, $Z_2$, ... $Z_n$ in the room 3 is associated with at least one luminaire 2.

A method according to embodiments is much faster than known configuration methods of known luminaire systems. By using a method according to embodiments of the invention, a luminaire system according to embodiments of the invention can be configured in less than 60 seconds, thereby saving a lot of time compared to current methods and luminaire systems.

In a first step, the method comprises providing connecting to the luminaire system 1 comprising a plurality of luminaires 2 installed in a plurality of positions in a room 3.

Next, the light intensity of each of the luminaires 2 in the luminaire system 1 is measured as well as the light intensity in the room while all luminaires 2 are turned OFF. Depending on the measured light intensity for each of the luminaires 2, the room 3 is divided into a predefined number of zones ($Z_1$, $Z_2$, ... $Z_n$). Then, the position of each luminaire 2 in the room 3 is estimated. Therefore, for each of the luminaires 2 the relative position of that luminaire 2 with respect to the light sensor arrangement 7, and thus with respect to a light sensor, is determined. One way to do this may be on the basis of the following mathematical equations and calculations and is illustrated in Fig. 3. A room 3 is considered in which a luminaire system 1 according to an embodiment of the invention is provided. In the example given the luminaire system 1 comprises a light sensor arrangement 7 comprising four light sensors located in a lens at the ceiling 4 of the room 3. Each of the light sensors can measure light intensity in a different direction such that the whole room 3 is covered. Assume that all luminaires 2 are OFF, and then one luminaire 2 is turned ON 100%. This will result in an illuminance vector I (see Fig. 3). This vector can be calculated by the use of at least two of the four light sensors:

$$I = \sqrt{I_1^2 + I_2^2}$$

whereby I is the illuminance vector, $I_1$ is light intensity measured with a first light sensor and $I_2$ is the light intensity measured with the second light sensor.

The distance, referred to as ObjectDistance, between the luminaire 2 and the light sensor can be estimated by the inverse-square law:

$$I = \frac{1}{ObjectDistance^2}$$

or

$$ObjectDistance = \sqrt{\frac{1}{I}}$$

It has to be taken into account that light coming from luminaires 2 located close to a wall 5 will be at least partly reflected by this wall 5. As a result, the luminaires 2 located close to a wall 5 will seem further away from the light sensor than they really are. Therefore, the result will be a very good estimate and not a 100% exact location.

In a next step, the angle θ of the illuminance vector I has to be determined. This can also be calculated with simple trigonometry:

$$\tan \theta = \frac{I_1}{I_2}$$

$$\theta = \tan^{-1}\left(\frac{I_1}{I_2}\right)$$

From both the angle θ and the distance between the light sensor and the luminaire 2, the relative position of the luminaire 2 in the room 3 with respect to the light sensor arrangement 7, in the example given to the four light sensors, can be calculated.

Next to the relative position of the luminaires 2 with respect to the light sensor arrangement 7, also the side of the room 3 where the windows 9 are located, or in other words the direction the incoming daylight is coming from, can be determined. This can be done by looking at the values of the four light sensors when all luminaires 2 are OFF. Then a light vector can be calculated to indicate if there are one or more windows 9 in the room 3 and in what direction with respect to the four light sensors these windows 9 are positioned. Once the location of the windows 9 is determined, for example the first zone Z1 can be defined as being closest to the windows 9. Once this first zone Z1 is determined, the other zones Z2 to Zn can also be determined. The room 3 may be divided into any suitable number of zones Z depending on how big the room 3 is and on how many luminaires 2 the luminaire system 1 comprises. The only limit on the number of zones Z is determined by digital addressable light interface (DALI) or the Zigbee Light systemaddressable system 6 used used to address the luminaires 2. For example, for a DALI system, the system is limited to 64 luminaires 2.

After dividing the room 3 into zones Z and estimating the relative position of each of the luminaires 2 in the room 3 with respect to the light sensor arrangement 7, at least one of luminaires 2 in the room 3 is fully automatically allocated to each of the zones Z, such that each zone in the room 3 is associated with at least one luminaire 2. This is a big advantage of the luminaire system according to embodiments of the invention, compared to existing luminaire systems in which the division of the zones Z and the allocations of the luminaires 2 to the different zones Z is done manually.

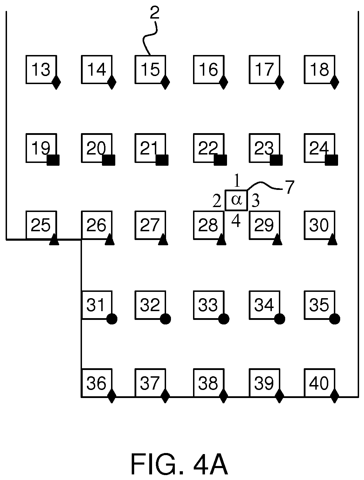

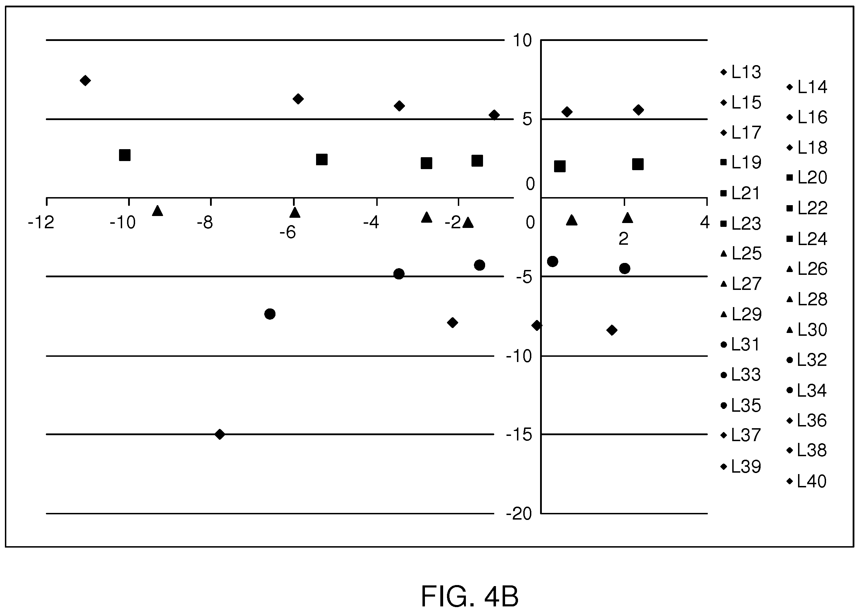

Optionally, after allocating each of the luminaires 2 to a particular zone, this allocation can be checked. If a user agrees with the allocation, the configuration can be ended. If the user does not agree with the allocation, he can manually change the allocation of one or more of the luminaires 2. Hereinafter, an example will be described by way of illustration. It has to be understood that this example is only to illustrate the invention and is not intended to limit the invention in any way. As an example, a room 3 is provided with 28 luminaires 2, placed in five rows and six columns (see Fig. 4A). The light sensor arrangement 7 used for in this example comprises four light sensors, located in a lens at the ceiling 4 of the room 3, each of the light sensors being able to measure light intensity in a direction over 90°. Applying the measurements and calculations as described above in the embodiments of this invention, results in a placement map as illustrated in Fig. 4B.

Although the different calculated positions of the luminaires 2 are not 100% exact, it is still possible to place a linear or non-linear grid on top of the mapped results. In that way, the row/column position of the luminaires 2 can be determined.

**Claims**

1. A luminaire system (1) comprising:

   - a plurality of luminaires (2) for installation in a room the luminaire system being **characterised in that** it further comprises:
   - a light sensor arrangement (7) comprising at least one light sensor and configured to measure light intensity in different directions such that:

     1) a light intensity of each of the luminaires (2) can be measured when installed in the room (3), and
     2) light coming in from outside the room can be measured,

   - mapping means (12) configured to address each of the luminaires (2) independently and to divide the room (3) into a predefined number of zones ($Z_1$, $Z_2$, ... $Z_n$) depending on the measured light intensity of each of the luminaires and on the incoming light from outside the room, and
   - processing means (13) configured to estimate the position of each luminaire (2) in the room (3)

and automatically allocate at least one of the luminaires (2) to each of the zones ($Z_1$, $Z_2$, ... $Z_n$), such that each zone ($Z_1$, $Z_2$, ... $Z_n$) is associated with at least one luminaire (2).

2. A luminaire system (1) according to claim 1, wherein the light sensor arrangement (7) comprises a plurality of light sensors.

3. A luminaire system (1) according to claim 2, wherein the light sensor arrangement (7) comprises four light sensors which are located in a lens and wherein, when the lens is divided into four quarters, one light sensor is located in each of the quarters of the lens.

4. A luminaire system (1) according to claim 2, wherein the number of light sensors in the light sensor arrangement (7) is equal to the number of luminaires (2) in the system (1) and wherein one light sensor is located in each of the luminaires (2).

5. A luminaire system (1) according to any of the previous claims, wherein the mapping means (12) is adapted to divide the room (3) into between one and eight zones ($Z_1$, $Z_2$, ... $Z_n$).

6. A luminaire system (1) according to any of the previous claims, wherein the mapping means (12) comprises a digital addressable light interface (DALI) or a Zigbee Light system to address each of the luminaires (2) independently.

7. A luminaire system (1) according to any of the previous claims, wherein each of the plurality of luminaires (2) is of a same type.

8. A computer implemented method for automatically configuring luminaires (2) in a luminaire system (1), the method comprising the steps of:

- connecting to the luminaire system (1) comprising a plurality of luminaires (2) installed in a plurality of positions in a room (3), the method being **characterised by** the steps of:

- obtaining a direction dependent measurement of the light intensity of each of the luminaires (2) in the room (3),
- obtaining a measurement of light coming in through windows in the room,
- dividing the room (3) into a predefined number of zones ($Z_1$, $Z_2$, ... $Z_n$) depending on:

1) the measured light intensity from each of the luminaires (2), and
2) on the incoming light to the room through windows in the room, and

a) determining the relative position of the luminaire (2) with respect to the light sensor arrangement (7), and
b) determining the location of the windows (9) in the room (3), thereby estimating the position of each luminaire (2) in the room (3) and allocate at least one of the luminaires (2) to each of the zones ($Z_1$, $Z_2$, ... $Z_n$) such that each zone ($Z_1$, $Z_2$, ... $Z_n$) in the room (3) is associated with at least one luminaire (2).

9. Method according to claim 1, wherein determining the relative position of the luminaire (2) with respect to the light sensor arrangement (7) is performed by:

- determining an illuminance vector (I) of the luminaire (2),
- determining the angle ($\theta$) of the illuminance vector (I), and
- determining the distance (ObjectDistance) between that luminaire (2) and the light sensor arrangement (7).

10. Method according to claim 9, wherein determining an illuminance vector (I) is done by means of at least two light sensors of the light sensor arrangement (7).

11. Method according to any of claims 8 to 10, furthermore comprising the steps of:

- checking the automatic allocation of each of the plurality of luminaires (2) to the different zones ($Z_1$, $Z_2$, ... $Z_n$), and
- whenever necessary, manually changing the allocation of one or more of the plurality of luminaires (2) to another zone ($Z_1$, $Z_2$, ... $Z_n$).

12. Computer program product for carrying out the method according to any of claims 8 to 11.

**Patentansprüche**

1. Ein Leuchtensystem (1), umfassend:

- eine Vielzahl von Leuchten (2) zur Installation in einem Raum, wobei das Leuchtensystem **dadurch gekennzeichnet ist, dass** es ferner umfasst:
- eine Lichtsensoranordnung (7), umfassend mindestens einen Lichtsensor und konfiguriert, um Lichtintensität in verschiedenen Richtungen zu messen, derart, dass:

1) eine Lichtintensität jeder der Leuchten (2) kann gemessen werden, wenn sie in dem Raum installiert ist, und

2) Licht, das von außerhalb des Raums einfällt, gemessen werden kann,

- ein Zuordnungsmittel (12), die konfiguriert ist, um jede der Leuchten (2) unabhängig zu adressieren und den Raum in eine vordefinierte Anzahl von Zonen (Z1, Z2, ... Zn) zu unterteilen, abhängig von der gemessenen Lichtintensität jeder der Leuchten, und von dem von außerhalb des Raums einfallenden Lichts, und

- ein Verarbeitungsmittel (13), das dazu konfiguriert ist, die Position jeder Leuchte (2) im Raum (3) zu schätzen und jeder der Zonen ($Z_1$, $Z_2$, ... $Z_n$) automatisch mindestens eine der Leuchten (2) zuzuordnen, so dass jede Zone ($Z_1$, $Z_2$, ... $Z_n$) mit mindestens einer Leuchte (2) assoziiert ist.

2. Leuchtensystem (1) nach Anspruch 1, wobei die Lichtsensoranordnung (7) eine Vielzahl von Lichtsensoren umfasst.

3. Leuchtensystem (1) nach Anspruch 2, wobei die Lichtsensoranordnung (7) vier Lichtsensoren umfasst, die in einer Linse angeordnet sind, und wobei, wenn die Linse in vier Viertel unterteilt ist, in jedem Viertel der Linse ein Lichtsensor angeordnet ist.

4. Leuchtensystem (1) nach Anspruch 2, wobei die Anzahl von Lichtsensoren in der Lichtsensoranordnung (7) gleich der Anzahl von Leuchten (2) in dem System (1) ist und wobei in jeder der Leuchten (2) ein Lichtsensor angeordnet ist.

5. Leuchtensystem (1) nach einem der vorangehenden Ansprüche, wobei das Zuordnungsmittel (12) dazu ausgebildet ist, den Raum (3) in zwischen eine und acht Zonen ($Z_1$, $Z_2$, ... $Z_n$) zu unterteilen.

6. Leuchtensystem (1) nach einem der vorangehenden Ansprüche, wobei das Zuordnungsmittel (12) eine digitale adressierbare Lichtschnittstelle (*digital addressable light interface*- DALI) oder ein Zigbee-Beleuchtungssystem umfasst, um jede Leuchte (2) unabhängig zu adressieren.

7. Leuchtensystem (1) nach einem der vorangehenden Ansprüche, wobei jede der Vielzahl von Leuchten (2) von selben Typ ist.

8. Ein computerimplementiertes Verfahren zum automatischen Konfigurieren von Leuchten (2) in einem Leuchtensystem (1), wobei das Verfahren folgende Schritte umfasst:

- Verbinden mit dem Leuchtensystem (1), das eine Vielzahl von Leuchten (2) umfasst, die an einer Vielzahl von Positionen in einem Raum (3) installiert sind,

wobei das Verfahren durch folgende Schritte gekennzeichnet ist:

- Erlangen einer richtungsabhängigen Messung der Lichtstärke jeder der Leuchten (2) im Raum (3),
- Erlangen einer Messung von Licht, das durch Fenster im Raum einfällt,
- Unterteilen des Raums (3) in eine vorgegebene Anzahl von Zonen ($Z_1$, $Z_2$, ... $Z_n$) abhängig von:

1) der gemessenen Lichtintensität von jeder der Leuchten (2), und
2) auf das einfallenden Licht in den Raum durch Fenster im Raum, und

a) Bestimmen der relativen Position der Leuchte (2) in Bezug auf die Lichtsensoranordnung (7), und
b) Bestimmen der Position des Fensters (9) im Raum (3), wodurch die Position jeder Leuchte (2) im Raum (3) geschätzt wird, und Zuteilen von mindestens einer der Leuchten (2) zu jeder der Zonen ($Z_1$, $Z_2$, ... $Z_n$), so dass jede Zone ($Z_1$, $Z_2$, ... $Z_n$) im Raum (3) mit mindestens einer Leuchte (2) assoziiert ist.

9. Verfahren nach Anspruch 1, wobei das Bestimmen der relativen Position der Leuchte (2) in Bezug auf die Lichtsensoranordnung (7) durchgeführt wird durch:

- Bestimmen eines Beleuchtungsstärkevektors (I) der Leuchte (2),
- Bestimmen des Winkels ($\theta$) des Beleuchtungsstärkevektors (I) und
- Bestimmen des Abstands (ObjectDistance) zwischen dieser Leuchte (2) und der Lichtsensoranordnung (7).

10. Verfahren nach Anspruch 9, wobei das Bestimmen eines Beleuchtungsstärkevektors (I) mittels zumindest zwei Lichtsensoren der Lichtsensoranordnung (7) durchgeführt wird.

11. Verfahren nach einem der Ansprüche 8 bis 10, ferner folgende Schritte umfassend:

- Überprüfen der automatischen Zuteilung jeder der Vielzahl von Leuchten (2) zu den verschiedenen Zonen ($Z_1$, $Z_2$, ... $Z_n$), und
- wenn nötig, manuelle Änderung der Zuteilung von einer oder mehreren der Vielzahl von Leuchten (2) zu einer anderen Zone ($Z_1$, $Z_2$, ... $Z_n$).

12. Computerprogrammprodukt zum Ausführen des Verfahrens nach einem der Ansprüche 8 bis 11.

**Revendications**

1. Système de luminaires (1) comprenant :

   - une pluralité de luminaires (2) destinés à être installés dans une pièce, le système de luminaires étant **caractérisé en ce qu'**il comprend en outre :
   - un agencement de capteur de lumière (7) comprenant au moins un capteur de lumière et configuré pour mesurer une intensité de lumière dans des directions différentes, de sorte que :

      1) une intensité de lumière de chacun des luminaires (2) peut être mesurée lorsqu'il est installé dans la pièce (3), et
      2) la lumière entrant de l'extérieur de la pièce peut être mesurée,

   - un moyen de mappage (12) configuré pour adresser indépendamment chacun des luminaires (2) et pour diviser la pièce (3) en un nombre de zones prédéfini ($Z_1$, $Z_2$, ... $Z_n$) selon l'intensité de lumière mesurée de chacun des luminaires et selon la lumière entrant de l'extérieur de la pièce, et
   - un moyen de traitement (13) configuré pour estimer la position de chaque luminaire (2) dans la pièce (3) et allouer automatiquement au moins l'un des luminaires (2) à chacune des zones ($Z_1$, $Za_2$, ... $Z_n$), de sorte que chaque zone ($Z_1$, $Z_2$, ... $Z_n$) est associée à au moins un luminaire (2).

2. Système de luminaires (1) selon la revendication 1, dans lequel l'agencement de capteur de lumière (7) comprend une pluralité de capteurs de lumière.

3. Système de luminaires (1) selon la revendication 2, dans lequel l'agencement de capteurs de lumière (7) comprend quatre capteurs de lumière qui sont situés dans une lentille et dans lequel, lorsque la lentille est divisée en quatre quartiers, un capteur de lumière est situé dans chacun des quartiers de la lentille.

4. Système de luminaires (1) selon la revendication 2, dans lequel le nombre de capteurs de lumière dans l'agencement de capteurs de lumière (7) est égal au nombre de luminaires (2) dans le système (1) et dans lequel un capteur de lumière est situé dans chacun des luminaires (2).

5. Système de luminaires (1) selon l'une quelconque des revendications précédentes, dans lequel le moyen de mappage (12) est adapté pour diviser la pièce (3) entre une à huit zones ($Z_1$, $Z_2$, ... $Z_n$).

6. Système de luminaires (1) selon l'une quelconque des revendications précédentes, dans lequel le moyen de mappage (12) comprend une interface numérique de lumière adressable (DALI) ou un système de lumière Zigbee pour adresser indépendamment chacun des luminaires (2).

7. Système de luminaires (1) selon l'une quelconque des revendications précédentes, dans lequel chacun de la pluralité de luminaires (2) est d'un même type.

8. Procédé implémenté par ordinateur pour configurer automatiquement des luminaires (2) dans un système de luminaires (1), le procédé comprenant les étapes suivantes :

   - la connexion au système de luminaires (1) comprenant une pluralité de luminaires (2) installés dans une pluralité de positions dans une pièce (3),
   le procédé étant **caractérisé par** les étapes suivantes :
   - obtenir une mesure dépendant de la direction de l'intensité de lumière de chacun des luminaires (2) dans la pièce (3),
   - obtenir une mesure de la lumière entrant par des fenêtres de la pièce,
   - diviser la pièce (3) en un nombre de zones prédéfini ($Z_1$, $Z_2$, ... $Z_n$) selon :

      1) l'intensité de lumière mesurée de chacun des luminaires (2), et
      2) la lumière entrant dans la pièce par des fenêtres de la pièce, et

      a) la détermination de la position relative du luminaire (2) par rapport à l'agencement de capteurs de lumière (7), et
      b) la détermination de l'emplacement des fenêtres (9) de la pièce (3), estimant ainsi la position de chaque luminaire (2) dans la pièce (3) et l'allocation d'au moins l'un des luminaires (2) à chacune des zones ($Z_1$, $Z_2$, ... $Z_n$) de sorte que chaque zone ($Z_1$, $Z_2$, ... $Z_n$) dans la pièce (3) soit associée à au moins un luminaire (2).

9. Procédé selon la revendication 1, dans lequel la détermination de la position relative du luminaire (2) par rapport à l'agencement de capteurs de lumière (7) est réalisée par :

- déterminer un vecteur d'illuminance (I) du luminaire (2),
- déterminer l'angle ($\theta$) du vecteur d'illuminance (I), et
- déterminer la distance (DistanceObjet) entre ce luminaire (2) et l'agencement de capteurs de lumière (7).

10. Procédé selon la revendication 9, dans lequel la détermination d'un vecteur d'illuminance (I) est effectuée d'au moyen d'au moins deux capteurs de lumière de l'agencement de capteurs de lumière (7).

11. Procédé selon l'une quelconque des revendications 8 à 10, comprenant en outre les étapes suivantes :

- vérifier l'allocation automatique de chacun de la pluralité de luminaires (2) aux zones différentes ($Z_1$, $Z_2$, ...$Z_n$), et
- chaque fois que c'est nécessaire, changer manuellement l'allocation d'un ou de plusieurs de la pluralité de luminaires (2) à une autre zone ($Z_1$, $Z_2$, ...$Z_n$).

12. Produit de programme d'ordinateur pour réaliser le procédé selon l'une quelconque des revendications 8 à 11.

FIG. 1

FIG. 2

FIG. 3

FIG. 4A

FIG. 4B

**EP 3 185 652 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110031897 A1